# EUROPÄISCHE PATENTSCHRIFT

(11) **EP 4 222 736 B1**
(45) Veröffentlichungstag und Bekanntmachung des Hinweises auf die Patenterteilung: **04.12.2024**
(21) Anmeldenummer: 22800231.7
(22) Anmeldetag: 07.10.2022
(51) Int. Cl.: G10L 15/08, G06F 3/16, G10L 15/02, G10L 15/04, G10L 15/22

(54) **VERFAHREN UND VORRICHTUNG ZUM ANSTEUERN EINER FUNKTIONSEINHEIT EINES FAHRZEUGES**
METHOD AND APPARATUS FOR CONTROLLING A FUNCTIONAL UNIT OF A VEHICLE
PROCÉDÉ ET DISPOSITIF POUR COMMANDER UNE UNITÉ FONCTIONNELLE D'UN VÉHICULE

(30) Priorität: 19.10.2021 DE 102021005206
(43) Veröffentlichungstag der Anmeldung: 09.08.2023
(73) Patentinhaber: Mercedes-Benz Group AG, 70372 Stuttgart (DE)
(72) Erfinder: LEDER, Markus, 70569 Stuttgart (DE); LAMBERTH-COCCA, Sabrina, 72218 Wildberg (DE)
(74) Vertreter: Novagraaf Group
(86) Internationale Anmeldenummer: PCT/EP2022/077905
(87) Internationale Veröffentlichungsnummer: WO 2023/066682

(56) Entgegenhaltungen:
- EP-B1- 3 078 021
- EP-B1- 3 555 881
- EP-B1- 3 559 944
- US-A1- 2016 379 635

## Beschreibung

Die vorliegende Erfindung betrifft ein Verfahren und eine Vorrichtung zur Bestimmung eines mehrteiligen Schlüsselwortes in einer Lautzeichenfolge in einer Sprachäußerung eines Nutzers.

Aus der US 2018/0342237 A1 ist ein Verfahren zur Erkennung eines Schlüsselwortes bekannt, bei dem eine Lautabfolge auf einem Gerät empfangen und eine Bestimmung eines Schlüsselworts durchgeführt wird. Sofern ein Schlüsselwort bestimmbar ist, wird die Lautzeichenfolge an einen externen Server geschickt. In einem weiteren Schritt wird ein von der Lautzeichenfolge von dem externen Server abgeleiteter Text empfangen, der auf Übereinstimmung mit dem Schlüsselwort untersucht wird.

Aus der EP 3 078 021 B1 ist ein Verfahren zur Bestimmung eines zweiteiligen Schlüsselwortes bekannt, wobei mit Empfang und Erkennung eines ersten Teils des Schlüsselwortes einer Spracheingabe erste Aktivitäten, beispielweise ein Aufbau einer Netzwerkverbindung ausgelöst werden. Mit dem Empfang und Erkennung eines zweiten Teils des Schlüsselwortes der Spracheingabe wird überprüft, ob der erste und zweite Teil gemeinsam mit dem Schlüsselwort übereinstimmen und sofern diese übereinstimmen eine semantische Erkennung weiterer Spracheingaben aktiviert wird.

Die EP 3 559 944 B1 offenbart ein Sprachbedienungssystem zur zweistufigen Bestimmung eines Schlüsselwortes, wobei die Vorrichtung ein Erkennungsmodul umfasst, das eingerichtet ist für zumindest ein Teil einer Spracheingabe eine Übereinstimmungswahrscheinlichkeit mit dem Schlüsselwort zu bestimmen und diese mit einem ersten Schwellwert zu vergleichen. Liegt die Wahrscheinlichkeit der Übereinstimmung über dem ersten Schwellwert, dann wird das Audiosignal zur weiteren Überprüfung an ein weiteres Erkennungsmodul eines Client-Servers übermittelt. Das weitere Erkennungsmodul ist eingerichtet, für die Spracheingabe eine weitere Übereinstimmungswahrscheinlichkeit mit dem Schlüsselwort zu bestimmen und mit einem zweiten, restriktiveren Schwellwert zu vergleichen. Liegt die weitere Übereinstimmungswahrscheinlichkeit über dem zweiten Schwellwert erfolgt ein Wecken des und/oder ein Auslösen einer Aktion durch das Sprachbedienungssystem.

Aus der EP 3 555 881 B1 ist ein Verfahren zur Bestimmung eines Schlüsselwortes eines automatischen Assistenten bekannt, bei dem Audiodaten empfangen und mittels einem trainierten Modell hinsichtlich einer Wahrscheinlichkeit für das Auftreten eines Schlüsselwortes analysiert werden. Wird einem ersten Schritt ermittelt, dass die Audiodaten keinerlei Schlüsselworte umfassen, dann werden diese empfangenen Audiodaten zur Anpassung eines Geräuschreduktionsfilters verwendet. Wird in einem weiteren, auf den ersten folgenden Schritt ermittelt, dass weitere empfangene Audiodaten potenziell Schlüsselworte umfassen, dann werden mit dem angepassten Geräuschreduktionsfilter aus den weiteren Audiodaten gefilterte Datenpakete erzeugt. Sofern bei einer Prüfung der Datenpakete mittels trainierten Datenmodell ein Vorhandensein von Schlüsselworten ermittelt wird, erfolgt eine Aktivierung des Assistenten. Das Verfahren erhöht die Erkennungswahrscheinlichkeit von Schlüsselwörtern insbesondere bei vorhandenen Hintergrundgeräuschen.

Die US 2016/379635 A1 offenbart eine Sprachbedieneinrichtung, bei der Sprachdaten empfangen und überwacht werden. Wird ein erster Teil eines Schlüsselwortes erkannt, dann wird die Sprachbedieneinrichtung aktiviert, wird nach der Erkennung des ersten Schlüsselwortes der zweite Teil des Schlüsselwortes erkannt, dann wird die Aktivierung der Sprachbedieneinrichtung aufrechterhalten. Wenn der zweite Teil des Schlüsselwortes nicht erkannt wird, dann wird die Sprachbedieneinrichtung wieder deaktiviert. Die Aktivierung umfasst vorliegend ein Aufwecken der Sprachbedieneinrichtung, so dass Spracheingaben empfangen und ausgewertet werden können.

Aufgabe der vorliegenden Erfindung ist ein alternatives Verfahren und eine Vorrichtung zur Erkennung von insbesondere eines zweiteiligen Schlüsselwortes zur Verfügung zu stellen.

Die Aufgabe wird durch ein Verfahren mit den Merkmalen des Anspruchs 1 sowie einer Vorrichtung gemäß Anspruch 7 gelöst. Die abhängigen Ansprüche definieren bevorzugte und vorteilhafte Ausführungsformen der vorliegenden Erfindung.

Bei dem erfindungsgemäßen Verfahren wird die empfangene, Lautzeichenabfolge in einem ersten Schritt bzw. einer ersten Suchphase auf das Vorhandensein eines ersten Teils des Schlüsselwortes überprüft. Dabei wird ein von einem Nutzer ausgehender Strom von Lauten in einen Strom von Lautzeichen d.h.in eine Lautzeichenfolge umgewandelt, die mit einer Vergleichszeichenabfolge verglichen wird.

Nur sofern der erste Teil des Schlüsselwortes erkannt wird, erfolgt in einem weiteren Schritt, d.h. einer zweiten Suchphase eine Überprüfung der Lautzeichenfolge auf das Vorhandensein eines zweiten Teils des Schlüsselwortes und sofern auch der zweite Teil erkannt wird, erfolgt eine Aktivierung des Sprachbedienungssystems. Die Erkennung des zweiteiligen Schlüsselwortes wird demnach derart umgesetzt, dass zunächst in der Lautzeichenfolge ein erster, auch Differenzierer genannter Teil des Schlüsselwortes gesucht wird, und sobald dieser erkannt ist, wird innerhalb von Zeit und Datenmengen bestimmten Grenzen nur noch nach dem auch Körper genannten zweiten Teil des Schlüsselwortes gesucht. Eine Aktivierung des Sprachbediensystems umfasst eine Aktion; beispielsweise wird nach Erkennung des Schlüsselwortes eine Fahrzeugfunktion ausgelöst oder ein Dialog eröffnet, bei dem der Nutzer über das Entertainmentsystem angefragt wird, welche Dienste, Funktionen er aktivieren will oder welche Informationen er wünscht. Unter Ausführung einer Aktion ist damit auch die Versendung von Befehlen vom Sprachsteuersystem an andere Steuersysteme zur Betätigung von Fahrzeugfunktionen zu verstehen. Die oftmals fälschliche Erkennung eines Schlüsselwortes durch Gebrauch des oder von Teilen des Schlüsselwortes in einem von der Aktivierungsabsicht sich unterscheidenden Zusammenhang wird durch die Erkennung in zwei Schritten reduziert. Die Erkennung des ersten und zweiten Teils des Schlüsselworts haben immer eine gewisse Fehlerrate. Wenn nun beide unabhängig voneinander erkannt werden müssen, wird diese Fehlerrate viel kleiner sein, als wenn das Schlüsselwort als Ganzes zu erkennen ist. Ist die Fehlerrate des ersten Teils des Schlüsselwortes beispielsweis 0.2 und die Fehlerrate des zweiten Teils des Schlüsselwortes 0.1, dann ergibt sich eine Gesamtfehlerrate von 0,02. Demgegenüber steht eine Fehlerrate für die Erkennung des Schlüsselwortes als Ganzes eine sehr viel höhere Fehlerrate von beispielsweise 0,1. Die einzelne Erkennung der Teile des Schlüsselworts in aufeinanderfolgenden Phasen führt damit gegenüber einer Erkennung des gesamten Schlüsselwortes zu einer geringeren Fehlerrate. Gemäß der Erfindung wird der zweite Teil des Schlüsselworts immer folgend auf den jüngsten ersten Teil des Schlüsselworts ermittelt. In dieser zweiten Suchphase wird hinter dem jüngsten ersten Teil des Schlüsselwortes nach dem zweiten Teil des Schlüsselwortes im Ringspeicher gesucht. Mit dem jüngsten ersten Teil des Schlüsselwortes ist der im Ringspeicher dem aktuellen Zeitpunkt zeitlich nächstliegende erste Teil zu verstehen. Hat die Menge der im Ringspeicher gespeicherten Lautzeichen das Limit erreicht und/oder ist ein Timer, d.h. die eine vorgegebene Zeit abgelaufen, wird wieder mit der Überprüfung nach dem ersten Teil des Schlüsselwortes fortgefahren. Ansonsten verbleibt das System in der Phase nach der Suche des zweiten Teils des Schlüsselwortes und beginnt wieder die Suche nach dem zweiten Teil hinter dem jüngsten ersten Teil des Schlüsselworts in dem aktuellen Ringspeicher. Mit anderen Worten, wird während der Suche nach dem zweiten Teil der erste Teil erkannt, so wird der Timer zurückgesetzt, und/oder die Menge der im Ringspeicher gespeicherten Lautzeichen bis zum Limit neu hochgezählt und nun ab diesem zuletzt gefundenen ersten Teil in einem weiteren Schritt wieder nach dem zweiten Teil des Schlüsselwortes gesucht. Durch das Rücksetzen von Timer und/oder Mengenzählung der gespeicherten Lautzeichen wird ein Abbruch der Suche nach dem zweiten Teil des Schlüsselwortes auf den nächstliegenden ersten Teil bezogen d.h. die Wahrscheinlichkeit eines Abbruchs bei der Suche nach dem zweiten Teil des Schlüsselwortes während der Spracheingabe ist deutlich reduziert.

Findet sich nach der Suche erneut zuerst der erste Teil des Schlüsselwortes, so wiederholt sich das Verfahren, d.h. dann wird der Timer erneut zurückgesetzt, vorzugsweise die zu speichernden Lautzeichen im Ringspeicher neu gezählt und in einem weiteren Schritt nach dem zweiten Teil des Schlüsselwortes gesucht. Das Verfahren wiederholt sich solange bis entweder ein auf den ersten Teil des Schlüsselwortes folgender zweiter Teil des Schlüsselwortes erkannt wird oder der Timer abläuft und/oder die Anzahl der im Ringspeicher gespeicherten Lautzeichen das vorgegebene Limit erreicht. In der ersten Suchphase wird damit nach dem ersten Teil, in der zweiten Suchphase wird sowohl nach dem ersten und als auch nach dem zweiten Teil des Schlüsselwortes gesucht.

In vorteilhafter Weise ist damit eine verbesserte Erkennung des mehrteiligen Schlüsselworts für den Fall ermöglicht, dass der Nutzer nach Nennung des ersten Teils des Schlüsselwortes abbricht bzw. pausiert und kurz darauf die Eingabe des zweiteiligen Schlüsselwortes wiederholt.

In einer modifizierten Ausführungsform wird der erste und der zweite Teil des Schlüsselwortes als erkannt bestätigt, sobald ein Ähnlichkeitsmaß der Lautzeichenfolge mit einer ersten und zweiten gespeicherten Vergleichszeichenabfolge über einem vorgegebenen Schwellwert liegt. Das Ähnlichkeitsmaß ermittelt sich mit aus dem Stand der Technik bekannten Verfahren für die String Distance, beispielsweise der minimalen Editierdistanz.

In einer weiteren Ausführungsform werden aufeinanderfolgende gleiche Lautzeichen einer eingehenden Lautzeichenfolge als ein einzelner Laut betrachtet. In vorteilhafter Weise werden dadurch unterschiedlich lange Aussprachedauern von einzelnen Lauten, beispielsweise Vokalen, eines Worts kompensiert und Fehlerkennungen der Schlüsselworte reduziert.

In einer weiteren Weiterbildung der Erfindung wird nach einer vorgegebenen Zeit nach Erkennung des ersten Teils des Schlüsselworts die Überprüfung nach dem zweiten Teil abgebrochen und die Suche nach dem ersten Teil fortgesetzt. Die Zeit ist so zu bemessen, dass selbst ein sehr langsam ausgesprochener zweiter Teil des Schlüsselwortes nicht durch Ablauf der vorgegebenen Zeit abgebrochen wird. In vorteilhafter Weise wird für den Fall, dass der Nutzer nach Aussprache des ersten Teils des Schlüsselwortes eine Pause macht und später zufällig ein dem zweiten Teil des Schlüsselwortes entsprechendes Wort ausspricht eine Interpretation als Schlüsselwort und eine ungewollte Aktivierung des Sprachbedienungssystems vermieden. Durch den Abbruch wird eine Erkennung eines neu gesprochenen mehrteiligen Schlüsselwortes ermöglicht.

Gemäß einer weiteren zusätzlichen oder alternativen Ausgestaltung der vorliegenden Erfindung werden die eingehenden Lautzeichen in einem Speicher fortlaufend gepuffert, wobei ab Erkennung des ersten Teils des Schlüsselwortes die Menge der in den Puffer eingespeichert Lautzeichen bestimmt wird. Erreicht die Anzahl der gespeicherten Lautzeichen ein vorgegebenes Limit, d.h. eine Obergrenze, beispielsweise sobald der erste Teil des Schlüsselwortes aus dem als Ringspeicher ausgebildeten Speicherpuffer auswandert, wird die Suche nach dem zweiten Teil des Schlüsselwortes abgebrochen und mit erneuter Suche nach dem ersten Teil fortgefahren. Sobald wieder eine Erkennung des ersten Teils erfolgt, wird die Menge der eingespeicherten Lautzeichen bis zum Erreichen des Limits neu gezählt.

In vorteilhafter Weise wird hiermit vermieden, dass nach bewusster oder auch zufälliger Nennung des ersten Teils des Schlüsselwortes nach weiteren durch beliebige Äußerungen des Nutzers und Geräusche der Umgebung bewirkten, im Pufferspeicher eingespeicherten Lauten ein zufällig genanntes, dem zweiten Teil des Schlüsselwortes entsprechendes Wort fälschlicherweise als zum ersten Teil des Schlüsselwortes zugehörig erkannt wird und eine ungewollte Aktivierung erfolgt.

In einer vorteilhaften Weiterbildung wird die Suche nach dem zweiten Teil des Schlüsselwortes abgebrochen, sobald die vorgegebene Zeit abgelaufen ist und sobald die Anzahl der gespeicherten Lautzeichen das Limit erreicht, je nachdem welches Kriterium als erstes erfüllt ist. Die Verwendung beider Abbruchkriterien ermöglicht Freiheitsgrade zur Abstimmung des Verfahrens auf Sprechergewohnheiten, wodurch eine bestmögliche Erkennung des Schlüsselwortes realisierbar ist.

Gemäß einer weiteren Ausgestaltung des Verfahrens wird die eingehende Lautzeichenfolge geglättet, indem über die Lautsignale ein fortlaufendes Betrachtungsfenster gelegt wird und nur Lautsignale in dem Betrachtungsfenster für die Überprüfung herangezogen werden, deren Anzahl innerhalb des Betrachtungsfensters eine vorgegebene Häufigkeitsschwelle überschreiten. Die Fenster sind dabei größer als die zyklisch von einem Steuergerät ermittelten Lautsignale. Zyklisch werden beispielsweise alle 10ms Lautsignale ermittelt, d.h. jeder einen gewissen Zeitraum andauernde Laut wird im Idealfall perfekter Erkennungsgüte mehrfach hintereinander im Puffer abgespeichert. Das Betrachtungsfenster weist dabei beispielsweise einen Wert von 50ms. Nun wird festgestellt, ob die in dem Beobachtungsfenster bestimmten Signale stabil sind oder stark schwanken. Sind die Signale stabil, d.h. die Anzahl erkannter gleicher Lautsignale in dem Beobachtungsfenster übersteigt die vorgegebene Häufigkeitsschwelle, kann von einer zuverlässigen Erkennung der Lautsignale ausgegangen werden. Wird die Häufigkeitsschwelle nicht erreicht, dann werden die Signale in dem Beobachtungsfenster aufgrund unzureichender Erkennungsgüte verworfen. In vorteilhafter Weise werden Erkennungsfehler des ersten und zweiten Teils des Schlüsselwortes reduziert.

Die erfindungsgemäße Vorrichtung umfasst Mittel zum Empfang einer Lautzeichenfolge, wobei
- die Mittel die Lautzeichenfolge auf das Vorhandensein eines ersten Teils des Schlüsselwortes überprüfen und nur sofern der erste Teil erkannt wird
- die Mittel die Lautzeichenfolge auf das Vorhandensein eines zweiten Teils des Schlüsselwortes überprüfen und nur sofern der zweite, auf den ersten folgenden Teil des Schlüsselwortes erkannt wird
- die Mittel das Sprachbedienungssystem aktivieren,
wobei der zweite Teil des Schlüsselworts folgend auf den jüngsten ersten Teil des Schlüsselworts ermittelt wird.

Die erfindungsmäßige Vorrichtung ermöglicht eine zuverlässige Erkennung eines mehrteiligen Schlüsselwortes.

Die vorliegende Erfindung wird nachstehend anhand von Ausführungsbeispielen unter Bezugnahme auf die beiliegenden Zeichnungen näher erläutert.

Es zeigt:
- Fig. 1: ein Flussdiagramm eines Verfahrensablaufs und
- Fig. 2: ein Sprachbedienungssystem zur Ausführung des erfindungsgemäßen Verfahrens.

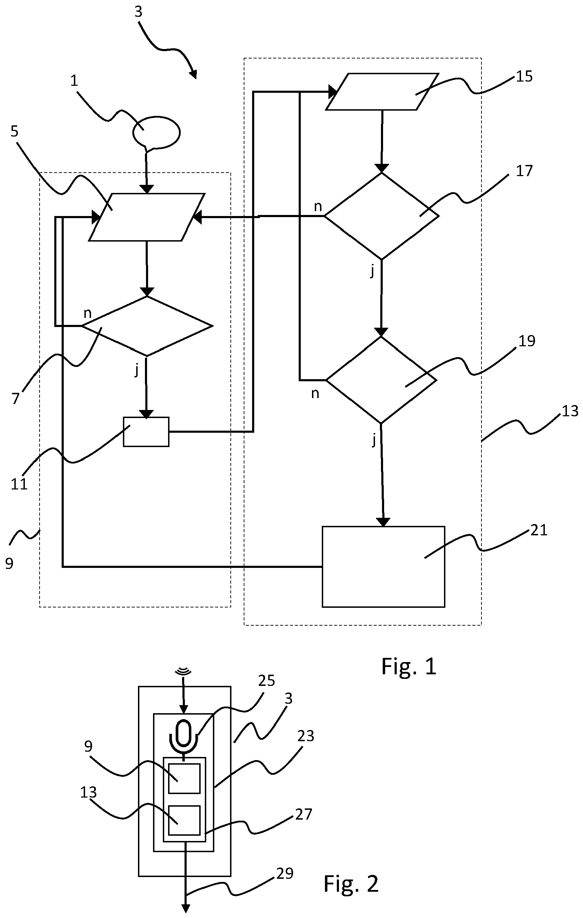

Das in Fig. 1 gezeigte Ablaufdiagramm zeigt das Verfahren zur Erkennung eines mehrteiligen Schlüsselwortes. Das Verfahren wird in einem Sprachbediensystem ausgeführt, das zyklisch Laute aus der Umgebung analysiert. Mit Erkennung eines mehrteiligen Schlüsselwortes ändert das Sprachbediensystem seinen Zustand und verlässt eine Wachstellung und führt eine Aktion aus. Eine Aktion kann einen Dialog mit einem Nutzer oder die Ausführung einer Fahrzeugfunktion wie ein Öffnen der Fenster umfassen.

Eine Lautsignale 1 umfassende Lautabfolge aus der Umgebung werden über ein nicht dargestelltes Mikrofon dem Sprachbediensystem 3 zugeführt. In einem ersten Schritt 5 werden Lautsingale in einen Strom von Zeichen als Lautzeichenfolge umgewandelt und in einem Ringspeicher abgespeichert. Die Suche nach dem oder nach Teilen des Schlüsselwortes erfolgt im Ringspeicher. Neue Lautzeichen werden in dem Ringspeicher hinzukommend eingespeichert, wobei in gleicher Anzahl Lautzeichen aus dem Ringspeicher auswandern.

Im folgenden Schritt 7 wird überprüft, ob ein im Folgenden Differenzierer genannter erster Teil des Schlüsselwortes erkannt wird. Wird kein Differenzierer erkannt, verbleibt das Sprachsystem in der Wachstellung. Ist ein Differenzierer in der Lautzeichenfolge enthalten, dann wird von der ersten Phase 9 über den Schritt 11 in eine zweite Phase 13 übergegangen, in der ein im Folgenden als Körper bezeichneter zweiter Teil des Schlüsselwortes gesucht wird. Im Schritt 11 wird der Ringspeicher übermittelt und im Schritt 15 erfolgt eine Überprüfung, ob die Lautzeichenfolge einen Körper umfasst.

Im Schritt 17 wird überprüft, ob nach Erkennung des Differenzierers eine vorgegebene Zeit abgelaufen ist und die Anzahl der im Ringspeicher eingespeicherten Lautzeichen ein vorgegebenes Limit erreicht. Ist eine oder alternativ sind beide dieser Abbruchbedingungen gegeben, dann wird die zweite Phase 13 abgebrochen, auf Schritt 5 zurückgesprungen und die Suche nach dem Differenzierer erneut gestartet. Sind die Bedingungen nicht erfüllt und ergibt im Schritt 19 die aktuelle Überprüfung, dass kein Körper in der Lautzeichenabfolge des Ringspeichers enthalten ist, dann wird in Schritt 15 zurückgesprungen, ab dem der aktuelle, durch neu aufgelaufene Lautzeichen ergänzte Ringspeicher überprüft wird. Wird ein Körper gefunden, dann gilt das zweiteilige Schlüsselwort als erkannt und das Sprachdialogsystem wird im Schritt 21 von der Wachstellung in einen Modus zur Ausführung einer Aktion oder in einen Dialogmodus versetzt. Dem Schritt 21 nachfolgend wird das System wieder in die Wachstellung in Schritt 5 versetzt.

In einer Abwandlung des vorab beschriebenen Verfahrens wird im Schritt 19 der Körper hinter dem jüngsten Differenzierer des im Schritt 11 übermittelten Ringspeichers gesucht. Mit Eintritt in die zweite Phase 13 wird demnach im aktuellen Ringspeicher zusätzlich zur Suche nach dem Körper fortlaufend auch nach einem jüngsten Differenzierer gesucht, ab dessen Auffindung die Überwachung der Abbruchbedingungen gestartet werden, d.h. die vorgegebene Zeit wird neu gestartet und/oder die Anzahl der im Ringspeicher gespeicherten Lautzeichen wird neu hochgezählt. Nach Neustart der Abbruchbedingung wird in einem weiteren Schritt wieder nur nach dem Körper gesucht, Wird nach dem jüngsten Differenzierer kein Körper gefunden, dann wird nach Ablauf der vorgegebenen Zeit und/oder sobald die Anzahl der gespeicherten Lautzeichen das Limit erreicht, jeweils referenziert auf den Zeitpunkt der Erkennung des jüngsten Differenzierers, wieder in Phase 9 in Schritt 5 zurück gewechselt. Damit wird erreicht, dass wenn ein Nutzer beispielsweise bei einem Schlüsselwort "Hallo Auto" nach "Hallo.." abbricht und dann nach einer Pause mit "Hallo Auto" fortfährt, eine Zeitbegrenzung oder eine Mengenbegrenzung der eingespeicherten Laute im Pufferspeicher nicht auf das erste sondern auf das zweite Hallo referenziert, so dass eine Abbruchwahrscheinlichkeit bei der Eingabe aufgrund der Pause reduziert wird.

Fig. 2 zeigt ein Sprachbediensystem 3, das ein Mittel 23 zum Empfang und zur Auswertung von Lautfolgen umfasst. Das Mittel 23 enthält beispielsweise ein Mikrofon 25 und eine mit dem Mikrofon 25 verbundene Recheneinheit 27 zur Verarbeitung der übermittelten Signale. Weiter ist die Recheneinheit 27 eingerichtet auf Basis der Auswertung Signale 29 an andere Steuergeräte zu übermitteln oder einen Dialog mit einem Nutzer zu eröffnen. In der Recheneinheit 27 des Mittels 23 werden die Signale wie in der Beschreibung zur Fig. 1 ausgeführt in der Phase 9 und nachfolgend in der Phase 13 stufenweise bearbeitet.

## Patentansprüche

1. Verfahren zur Erkennung von zweiteiligen Schlüsselwörtern zur Aktivierung eines Sprachbediensystems mit folgenden Schritten:
- Empfang einer Lautzeichenfolge (5),
- Puffern der Lautzeichenfolge in einem Speicher,
- Überprüfung der Lautzeichenfolge auf das Vorhandensein eines ersten Teils des Schlüsselwortes (7) und nur sofern der erste Teil erkannt wird, wobei mit Erreichen eines Limits der Menge der im Speicher gespeicherten Lautzeichen und/oder nach Ablauf einer vorgegebenen Zeit die Überprüfung nach dem ersten Teil des Schlüsselwortes (7) wieder fortgesetzt wird,
- Überprüfung der Lautzeichenfolge auf das Vorhandensein eines zweiten Teils des Schlüsselwortes (19), wobei zusätzlich fortlaufend nach einem jüngsten ersten Teil des Schlüsselwortes (7) gesucht wird,
**dadurch gekennzeichnet, dass**
nur sofern der zweite, auf den ersten folgenden Teil des Schlüsselwortes erkannt wird,
- Aktivierung des Sprachbedienungssystem (21) zur Ausführung einer Aktion, wobei der zweite Teil des Schlüsselworts folgend auf den jüngsten ersten Teil des Schlüsselworts ermittelt wird.

2. Verfahren nach Anspruch 1,
**dadurch gekennzeichnet, dass**
der erste und der zweite Teil des Schlüsselwortes als erkannt bestätigt wird, sobald ein Ähnlichkeitsmaß der Lautzeichenfolge mit einer ersten und zweiten gespeicherten Vergleichszeichenabfolge über einem vorgegebenen Schwellwert liegt.

3. Verfahren nach einem der Ansprüche 1 bis 2,
**dadurch gekennzeichnet, dass**
aufeinanderfolgende gleiche Lautzeichen in einer eingehenden Lautzeichenfolge als ein einzelnes Lautzeichen betrachtet werden.

4. Verfahren nach einem der Ansprüche 1 bis 3,
**dadurch gekennzeichnet, dass**
nach einer vorgegebenen Zeit nach Erkennung des ersten Teils des Schlüsselwortes die Überprüfung nach dem zweiten Teil abgebrochen (17) und die Suche nach dem ersten Teil fortgesetzt (7) wird.

5. Verfahren nach einem der Ansprüche 1 bis 4,
**dadurch gekennzeichnet, dass**
die eingehende Lautzeichenfolge in dem Speicher fortlaufend gepuffert wird, wobei ab Erkennung des ersten Teils des Schlüsselwortes die Menge der in den Puffer eingespeicherte Lautzeichen bestimmt wird, wobei mit Erreichen eines vorgegebenen Limits die Suche nach dem zweiten Teil des Schlüsselwortes abgebrochen (17) und mit erneuter Suche nach dem ersten Teil fortgefahren (7) wird.

6. Verfahren nach einem der Ansprüche 1 bis 5,
**dadurch gekennzeichnet, dass**
die eingehende Lautzeichenfolge geglättet wird, indem über die Lautzeichenfolge ein fortlaufendes Betrachtungsfenster gelegt wird und nur Lautzeichen in dem Betrachtungsfenster für die Überprüfung herangezogen werden, deren Anzahl innerhalb des Betrachtungsfenster eine vorgegebene Häufigkeitsschwelle überschreitet.

7. Sprachbediensystem zur Ausführung des Verfahrens nach Anspruch 1 bis 6, umfassend Mittel (23) zum Empfang und Puffern einer Lautzeichenfolge, wobei
- die Mittel (23) die Lautzeichenfolge auf das Vorhandensein eines ersten Teils des Schlüsselwortes überprüfen und nur sofern der erste Teil erkannt wird, wobei mit Erreichen eines Limits der Menge der im Speicher gespeicherten Lautzeichen und/oder nach Ablauf einer vorgegebenen Zeit die Überprüfung nach dem ersten Teil des Schlüsselwortes wieder fortgesetzt wird,
- die Mittel (23) die Lautzeichenfolge auf das Vorhandensein eines zweiten, auf den ersten Teil folgenden Teils des Schlüsselwortes überprüfen, wobei zusätzlich fortlaufend nach einem jüngsten ersten Teil des Schlüsselwortes (7) gesucht wird, **dadurch gekennzeichnet, dass**
nur sofern der zweite, auf den ersten folgenden Teil des Schlüsselwortes erkannt wird,
- die Mittel (23) das Sprachbedienungssystem zur Ausführung einer Aktion aktivieren, wobei der zweite Teil des Schlüsselworts folgend auf den jüngsten ersten Teil des Schlüsselworts ermittelt wird.

## Claims

1. Method for recognizing two-part keywords for activating a voice control system, the method comprising the following steps:
- receiving a phonetic character sequence (5),
- buffering the phonetic character sequence in a memory,
- checking the phonetic character sequence for the presence of a first part of the keyword (7) and, only if the first part is recognized, wherein, when a limit of the number of phonetic characters stored in the memory is reached and/or after a predefined period of time has elapsed, the check for the first part of the keyword (7) is continued,
- checking the phonetic character sequence for the presence of a second part of the keyword (19), wherein, additionally, a continuous search is carried out for a most recent first part of the keyword (7),
**characterized in that**
only if the second part of the keyword following the first is recognized,
- activating the voice control system (21) to carry out an action, wherein the second part of the keyword is ascertained following the most recent first part of the keyword.

2. Method according to claim 1,
**characterized in that**
the first and the second part of the keyword are confirmed as recognized as soon as a similarity measure of the phonetic character sequence with a first and second stored comparison character sequence is above a predefined threshold value.

3. Method according to either of claims 1 or 2,
**characterized in that**
consecutive identical phonetic characters in an incoming phonetic character sequence are considered to be a single phonetic character.

4. Method according to any of claims 1 to 3,
**characterized in that**
after a predefined period of time after recognition of the first part of the keyword, the check for the second part is terminated (17) and the search for the first part is continued (7).

5. Method according to any of claims 1 to 4,
**characterized in that**
the incoming phonetic character sequence is continuously buffered in the memory, wherein the number of phonetic characters stored in the buffer is determined as from recognition of the first part of the keyword, wherein, when a predefined limit is reached, the search for the second part of the keyword is terminated (17) and the search for the first part is restarted (7).

6. Method according to any of claims 1 to 5,
**characterized in that**
the incoming phonetic character sequence is smoothed by placing a continuous observation window over the phonetic character sequence and only phonetic characters in the observation window whose number within the observation window exceeds a predefined frequency threshold are used for the check.

7. Voice control system for carrying out the method according to claims 1 to 6,
comprising means (23) for receiving and buffering a phonetic character sequence, wherein
- the means (23) check the phonetic character sequence for the presence of a first part of the keyword and, only if the first part is recognized, wherein, when a limit of the number of phonetic characters stored in the memory is reached and/or after a predefined period of time has elapsed, the check for the first part of the keyword is continued,
- the means (23) check the phonetic character sequence for the presence of a second part of the keyword following the first part, wherein, additionally, a continuous search is carried out for a most recent first part of the keyword (7),
**characterized in that**
only if the second part of the keyword following the first is recognized,
- the means (23) activate the voice control system to carry out an action, wherein the second part of the keyword is ascertained following the most recent first part of the keyword.

## Revendications

1. Procédé pour la reconnaissance de mots-clés en deux parties pour l'activation d'un système de commande vocale, comportant les étapes suivantes :
- réception d'une série de signes sonores (5),
- mise en mémoire tampon de la série de signes sonores dans une mémoire,
- vérification de la présence d'une première partie du mot-clé (7) dans la série de signes sonores et uniquement dans la mesure où la première partie est reconnue, dans lequel la vérification de la première partie du mot-clé (7) est à nouveau poursuivie lorsqu'une limite de la quantité de signes sonores mémorisés dans la mémoire est atteinte et/ou après écoulement d'un temps prédéfini,
- vérification de la présence d'une seconde partie du mot-clé (19) dans la série de signes sonores, dans lequel une première partie la plus récente du mot-clé (7) est en outre recherchée en continu,
**caractérisé en ce que**
uniquement dans la mesure où la seconde partie du mot-clé, laquelle suit la première partie, est reconnue,
- activation du système de commande vocale (21) pour l'exécution d'une action, dans lequel la seconde partie du mot-clé est déterminée à la suite de la première partie la plus récente du mot-clé.

2. Procédé selon la revendication 1,
**caractérisé en ce que**
la première et la seconde partie du mot-clé sont confirmées comme étant reconnues dès qu'une mesure de similitude de la série de signes sonores avec une première et une seconde série de signes de comparaison mémorisées est supérieure à une valeur seuil prédéfinie.

3. Procédé selon l'une des revendications 1 à 2,
**caractérisé en ce que**
des signes sonores identiques successifs dans une série de signes sonores entrante sont considérés comme un seul signe sonore.

4. Procédé selon l'une des revendications 1 à 3,
**caractérisé en ce que**
après un temps prédéfini après la reconnaissance de la première partie du mot-clé, la vérification de la seconde partie est interrompue (17) et la recherche de la première partie est poursuivie (7).

5. Procédé selon l'une des revendications 1 à 4,
**caractérisé en ce que**
la série de signes sonores entrante est mise en mémoire tampon de manière continue dans la mémoire, dans lequel la quantité de signes sonores mémorisés dans la mémoire tampon est spécifiée à partir de la reconnaissance de la première partie du mot-clé, dans lequel, lorsqu'une limite prédéfinie est atteinte, la recherche de la seconde partie du mot-clé est interrompue (17) et la recherche de la première partie est de nouveau poursuivie (7).

6. Procédé selon l'une des revendications 1 à 5,
**caractérisé en ce que**
la série de signes sonores entrante est lissée en superposant à la série de signes sonores une fenêtre d'observation continue et en n'utilisant pour la vérification que les signes sonores dans la fenêtre d'observation, dont le nombre à l'intérieur de la fenêtre d'observation dépasse un seuil de fréquence prédéfini.

7. Système de commande vocale pour l'exécution du procédé selon les revendications 1 à 6,
comprenant des moyens (23) permettant de recevoir et de mettre en mémoire tampon une série de signes sonores, dans lequel
- les moyens (23) vérifient la série de signes sonores quant à la présence d'une première partie du mot-clé et seulement dans la mesure où la première partie est reconnue, dans lequel la vérification de la première partie du mot-clé est à nouveau poursuivie lorsqu'une limite de la quantité de signes sonores mémorisés dans la mémoire est atteinte et/ou après écoulement d'un temps prédéfini,
- les moyens (23) vérifient la série de signes sonores quant à la présence d'une seconde partie du mot-clé, laquelle suit la première partie, dans lequel une première partie la plus récente du mot-clé (7) est en outre recherchée en continu,
**caractérisé en ce que**
uniquement dans la mesure où la seconde partie du mot-clé, laquelle suit la première partie, est reconnue,
- les moyens (23) activent le système de commande vocale pour l'exécution d'une action, dans lequel la seconde partie du mot-clé est déterminée à la suite de la première partie la plus récente du mot-clé.
